# EUROPEAN PATENT SPECIFICATION

(11) **EP 2 937 866 B1**
(45) Date of publication and mention of the grant of the patent: **29.08.2018**
(21) Application number: 13865341.5
(22) Date of filing: 25.10.2013
(51) Int. Cl.: G21C 5/00, G21C 11/02, G21F 3/00, G21C 5/12, G21F 1/12

(54) **MEMBER FOR NUCLEAR REACTORS**
ELEMENT FÜR KERNREAKTOREN
ÉLÉMENT POUR RÉACTEURS NUCLÉAIRES

(30) Priority: 19.12.2012 JP 2012276317
(43) Date of publication of application: 28.10.2015
(73) Proprietor: Ibiden Co., Ltd., Ogaki-shi, Gifu 503-8604 (JP)
(72) Inventor: HAN, Mingxu, Ibi-gun, Gifu 501-0695 (JP); TAKAGI, Takashi, Ibi-gun, Gifu 501-0695 (JP)
(74) Representative: Hoefer & Partner Patentanwälte mbB
(86) International application number: PCT/JP2013/078947
(87) International publication number: WO 2014/097740

(56) References cited:
- DE-A1-102009 049 811
- JP-A- H04 175 698
- JP-A- S59 132 396
- JP-A- 2002 303 692
- JP-A- 2006 010 330
- US-A- 3 212 989

## Description

### Technical Field

The present invention relates to a member for neutron moderation or neutron shielding for nuclear reactors such as a light water reactor such as a boiling water reactor and a pressurized water reactor, a heavy water reactor, a gas-cooled reactor such as a high temperature gas-cooled reactor and an ultrahigh temperature gas-cooled reactor, a liquid metal-cooled reactor, and a fast breeder reactor.

### Background Art

Since a graphite material exhibits little absorption of neutrons and has relatively high capability for neutron moderation, the material has been widely used as a neutron moderator and a neutron shield for nuclear reactors.

Graphite material has been used as a neutron moderator in a graphite-moderated reactor and also a high temperature gas-cooled reactor on which research and development have been advanced. Furthermore, graphite material has been used as a neutron shield in the field of a fast reactor and the like.

However, a bulk body of graphite exhibits a behavior that it contracts upon irradiation and, after the volume reaches a minimum volume called turn around (TA), it starts to expand (hereinafter referred to as "swelling"). The life end of a graphite structure is designed so as not to exceed the TA irradiation dose of irradiation dimensional change. Furthermore, it has been also known that creep deformation occurs under neutron irradiation (hereinafter referred to as "creep deformation") and the creep deformation increases with the operation of the nuclear reactor, resulting in hindrance to the function of the graphite structure.

Moreover, since the graphite material exhibits different behavior in the creep deformation and swelling for each manufacturer and for each grade, neutron irradiation is investigated for each grade of the graphite material and data on the creep deformation and swelling are collected and put into a database, and it is reflected in the design of member for nuclear reactors.

DE 10 2009 049811 A1 discloses a member comprising an aggregate of graphite particulate matter, the member being partially covered by a layer of silicon carbide.

Patent Document 1 describes an operation method of a nuclear reactor for suppressing the occurrence of the creep deformation. Specifically, there is described a method of reducing residual stress generated in the graphite structure to lengthen the life of the graphite structure by altering the temperature of the graphite structure in the nuclear reactor through changing the operation mode of the nuclear reactor and thereby generating reverse tensile stress in the portion where compression stress is generated to thereby cause inverted creep deformation.

### Prior Art Documents

### Patent Documents

Patent Document 1: JP-A-2001-194481

### Summary of the Invention

### Problems that the Invention is to Solve

However, the method described above is a method of not suppressing the creep deformation of the graphite structure (graphite material) itself but intending to lengthen the life of the graphite structure by the operation method.

Since the method restricts the operation method of a nuclear reactor, not only the capability of the nuclear reactor is not sufficiently achieved but also the operation with frequently changing the output of the nuclear reactor is not preferable in view of maintaining the stability of the nuclear reactor.

Moreover, it is one method of approach for lengthening the life of the graphite material for nuclear facilities to improve the quality of the graphite material to thereby develop a material that is resistant to creep deformation and swelling but, in order to make the material usable in an actual nuclear reactor, it is inevitable to conduct a neutron irradiation test for the new graphite material to collect data regarding the swelling and creep deformation. In the graphite material subjected to neutron irradiation, C-13 contained in the graphite in an amount of more than 1% is radioactivated by neutrons to produce radioactive C-14 whose half-life is 5,730 years to be contained therein and also various substances are to be formed, so that it becomes necessary to wait until the generation of radiation ceases or to take care that the analysis is performed under an environment of complete shielding of the radiation. Therefore, it is considered to be a problem that it requires time and labor for improving the quality of the graphite material to develop a material resistant to creep deformation.

It is one of objects of the present invention to provide a member for nuclear reactors capable of being stably used without swelling and creep deformation using an existing graphite material even when directly exposed to neutrons, with no additional improvements in nuclear reactor operation conditions or devices.

### Means for Solving the Problems

A member for nuclear reactors according to the present invention for solving at least a part of the above problems includes the features of present claim 1.

### Advantage of the Invention

The member for nuclear reactors of the present invention includes: a core section including an aggregate of graphite particulate matter; and a covering layer including a ceramic dense body that covers the core section. Since graphite, which is affected by neutron irradiation, is used in a state of an aggregate of particulate matter, the particulate matter is not bonded and hence the shape and size of the member for nuclear reactors are not affected even when a creep phenomenon, expansion, contraction, or the like occurs. Also, since the aggregate of graphite particulate matter is not limited in the quality, versatile graphite materials already having data of swelling and creep deformation upon neutron irradiation can be used. Therefore, it is unnecessary to collect new data and it is possible to adopt them as members for nuclear facilities without requiring time and labor. The member for nuclear reactors of the invention has a covering layer composed of a ceramic dense body that covers the whole core section. Since the covering layer composed of a ceramic dense body is more durable against neutron irradiation than graphite, the influence on the shape and size of the member for nuclear reactors is small. Thus, according to the member for nuclear reactors of the present invention, it is possible to provide a member for nuclear reactors capable of being stably used without creep deformation and the like even when directly exposed to neutrons.

### Brief Description of the Drawings

[FIG. 1] FIG. 1 is a cross-sectional view of the member for nuclear reactors of Example 1 of the invention.
[FIG. 2] FIG. 2 is a cross-sectional view of the member for nuclear reactors of Example 2 of the invention.

### Modes for Carrying Out the Invention

The member for nuclear reactors according to the present invention includes: a core section composed of an aggregate of graphite particulate matter; and a covering layer composed of a ceramic dense body that covers the core section.

The graphite of the member for nuclear reactors is not limited to any particular type. For example, it may be any of a natural graphite, an artificial graphite, a kish graphite, and the like. Particularly, since versatile graphite materials already having a database of swelling and creep deformation generated by neutron irradiation can be used, the member can be easily adopted as a member for nuclear reactors. As the versatile graphite materials having a database of swelling and creep deformation, there may be, for example, ET-10 manufactured by Ibiden Co., Ltd. and the like but a manufacturer and a grade are not limited as long as the material has a database of swelling and creep deformation.

The core section is composed of an aggregate of graphite particulate matter. Since the core section is composed of the aggregate of graphite particulate matter, it does not influence the covering layer that maintains the whole shape even when each particulate matter creeps or deforms, so that it is possible to provide a member for nuclear reactors capable of being stably used without swelling and creep deformation even when directly exposed to neutrons.

Moreover, in the case where it is used as a member for neutron moderation, for the aggregate of graphite particulate matter, it is preferable to use a highly pure material. A desirable ash content of the aggregate of graphite particulate matter is 20 ppm by weight or less. When the content exceeds 20 ppm by weight, impurities absorb neutrons and it becomes difficult to raise the output of the nuclear reactor. Furthermore, a desirable boron content of the aggregate of graphite particulate matter is 1.0 ppm by weight or less. Since boron easily absorbs neutrons, it especially becomes difficult to raise the output of the nuclear reactor when more than 1.0% by weight of boron is contained.

Incidentally, in the case where the member for nuclear reactors is used as a control member (e.g., a control rod or an emergency shield), a powder or particles of boron, B₄C, or the like may be added to the aggregate of graphite particulate matter.

The particulate matter may include a powder, a particle, and a mixture thereof. The particle size of the graphite particulate matter is not particularly limited. For example, a powder or particle having a 50% volume particle size of 0.1 µm to 1 mm can be utilized. Moreover, as the aggregate of graphite particulate matter, powders or particles having different particle sizes may be blended together. When the powders or particles having different particle sizes are blended together, fine particles are inserted into spaces between coarse particles and thus bulk density can be increased as a whole aggregate of graphite particulate matter. A desirable bulk density of the aggregate of graphite particulate matter is from 1.0 to 2.0 g·cm⁻³. When the bulk density is less than 1.0 g·cm⁻³, porosity increase and hence the capability of moderating neutrons decreases. When the bulk density exceeds 2.0 g·cm⁻³, there occurs a spring-back phenomenon where the hardened surface of the aggregate of particulate matter is expanded by the infiltration of CVD gas in the process of film formation by vapor deposition, a force is imparted to a thin covering layer in the middle of the film formation, and the film layer is prone to crack, so that the member for nuclear reactors having an objective shape becomes difficult to obtain.

The 50% volume particle size of the aggregate of graphite particulate matter can be measured by means of a laser diffraction particle size distribution meter. Incidentally, in the case of containing coarse particles having a particle size of more than 2 mm, since diffraction intensity on the laser diffraction particle size distribution meter is not sufficiently obtained, the 50% volume particle size of the whole can be obtained by measuring the region having a particle size of more than 2 mm using a test sieve as an auxiliary.

The bulk density of the aggregate of graphite particulate matter is density measured including the porosity between the aggregates of graphite particulate matter. In the case where the shape of the member for nuclear reactors is a complex shape and the bulk density is difficult to measure, the volume and mass of the member for nuclear reactors are measured and, after the member is destroyed to remove the core section, the volume and mass are again measured. The mass of the core section can be obtained by calculating a difference between them. The volume of the whole member for nuclear reactors and that of the core section can be easily measured by the water displacement method even in the case of an irregular shaped one.

The covering layer composed of a ceramic dense body that covers the core section may be any one without particular limitation. For example, the covering layer may be obtained by forming a sintered body into a shell shape and filling the aggregate of graphite particulate matter into its internal space, a method of press-molding the aggregate of graphite particulate matter to obtain an objective shape and subsequently depositing a hard ceramic film on the surface. As the deposition method of the ceramic film, methods such as chemical vapor deposition (CVD) and physical vapor deposition (PVD) can be utilized. Of these, since the ceramic is obtained by thermally decomposing a raw material gas in the case of the chemical vapor deposition, the covering layer composed of a dense body for the member for nuclear reactors of the invention can be easily obtained.

The covering layer composed of a ceramic dense body that covers the core section covers the whole core section. This is because the aggregate of graphite particulate matter is less prone to flow out when it covers the whole core section.

As the chemical vapor deposition, methods such as thermal CVD, optical CVD, laser CVD, and plasma CVD can be utilized. As for the aggregate of graphite particulate matter, a definite shape can be imparted by pressing. As a pressing method, any of cold isostatic press (CIP), hot isostatic press (HIP), uniaxial press, and the like can be utilized.

Furthermore, a thin binder may be added to the graphite particulate matter so as to be able to maintain the shape until the covering layer is formed. As the binder, an organic binder, an inorganic binder, and the like can be utilized without particular limitation but it is favourable to use an organic binder. When the binder is an organic binder, it is carbonized by heating or is thermally decomposed and evaporated.

In the case where the organic binder is carbonized, the binder is converted into carbon to remain in the core section and, in the case where the organic binder is thermally decomposed and completely evaporated, the core section can be formed with only the used aggregate of graphite particulate matter.

Moreover, the core section can be formed by a wet method with adding a solvent to the graphite particulate matter. For example, after an alcohol is added to the graphite particulate matter to form a cake-like one, it is press-molded to afford an objective shape and then dried, whereby the core section can be obtained. Alternatively, a slurry obtained by adding an alcohol to the graphite particulate matter is poured into a mold whose surface has a net shape and, after the solvent is removed, the slurry is dried, whereby the core section can be obtained.

Since graphite entrains air when finely pulverized and thus bulk density thereof is difficult to increase, it is necessary to press it under high pressure. However, in the case where the core section is formed by the wet method, the particles of graphite are easily moved by the action of the fluid and fine particles are easily filled into the spaces between coarse particles. Therefore, the bulk density is easily increased and a core section having high density can be easily obtained.

The material of the coating layer is not particularly limited. The material for the coating layer is not limited to carbide-based ceramics, oxide-based ceramics, nitride-based ceramics, carbonaceous materials, and the like. Additionally, pyrolytic carbon, silicon carbide, zirconium carbide, tantalum carbide, titanium carbide, and the like. Of these, since silicon carbide, zirconium carbide, tantalum carbide, and titanium carbide have corrosion resistance to oxygen and water, they are hardly consumed by water and oxygen present in the nuclear reactor even when used for a long period of time and hence can be suitably utilized. Moreover, since the coating layers thereof are more durable against neutron irradiation than graphite, the influence on the shape and size of the member for nuclear reactors can be reduced.

The coating layer may be a single layer or may be composed of multiple layers. In the case where it is composed of multiple layers, the layers may be different kinds of layers or the same kind of layers. In the case of a compound such as carbide or nitride, the elemental ratio may be different. For example, in the case of tantalum carbide, a combination of Ta₄C₃, Ta₂C, and/or TaC and the like may be used.

The thickness of the covering layer is not particularly limited but is desirably 10 µm or more and 5 mm or less. When the thickness of the covering layer is 10 µm or more, the covering layer is less likely to receive a hole due to consumption, impact, and the like and thus the inside graphite particulate matter can be made less prone to flow out. When the thickness of the covering layer is 5 mm or less, unevenness in the thickness owing to the difference in the film formation rate is difficult to generate and a member for nuclear reactors having high dimensional precision can be obtained.

It may be more favourable to configure the thickness of the covering layer in a range from 20 µm to 3 mm. When the thickness of the covering layer is 20 µm or more, the covering layer has high mechanical strength, so that the layer can be made difficult to damage in the nuclear reactor. When the thickness of the covering layer is 3 mm or less, the influence of the unevenness in the thickness owing to the difference in the film formation rate can be reduced.

As for a measurement method of the thickness of the covering layer, the member for nuclear reactors is cut to expose the cross-section of the covering layer. The thickness can be obtained by measuring the cross-section by means of SEM (scanning electron microscope), a tool microscope, or the like.

In the covered graphite molded body, the inside graphite powder can be homogeneously dispersed by means of an ultrasonic device to thereby achieve uniformity.

As for the member for nuclear reactors, the shape, size, and applications are not particularly limited. Since graphite is present inside, the capability of moderating neutrons is high and particularly, the member is useful as a member for neutron moderation. As the moderation material, it can be suitably utilized in a graphite reactor, a high temperature gas-cooled reactor, and the like. Besides, it can be utilized as a shield for preventing the leakage of radioactivity.

The shape of the member for neutron moderation is not particularly limited. For example, a spherical member for neutron moderation having a diameter of 30 mm to 100 mm is suitably utilized in the high temperature gas-cooled reactor and a hexagonal column-shaped member for neutron moderation having a height of 80 cm and a hexagonal bottom with a side length of 20 cm or the like can be suitably utilized in the graphite reactor. Incidentally, the member for neutron moderation can be appropriately utilized by changing the shape and size thereof according to the structure of the reactor and the use conditions.

### Examples

### [Example 1]

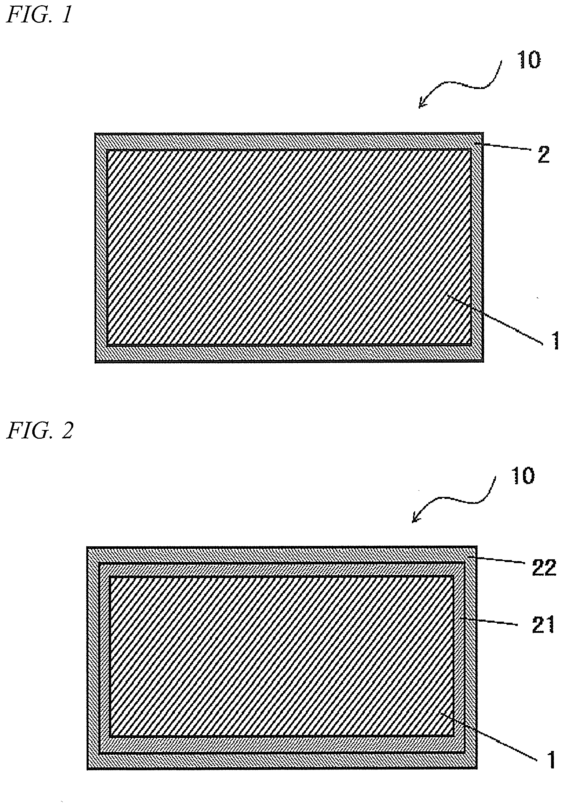

The following will describe Example 1 according to the present invention. FIG. 1 is a cross-sectional view of the member for nuclear reactors of Example 1 of the invention. Example 1 has a structure where the surface of a pellet-shaped core section is covered with a covering layer of silicon carbide (SiC).

### <Core Section Molding>

A graphite powder that is a graphite particulate matter having a weight of 3.1 g and a 50% volume particle size of 3.65 µm is filled into a mold having an aperture of φ25 mm and was pressurized under a pressure of 19 MPa. A core section molded from the graphite powder is taken out of the mold. A flat plate-like core section with φ25×6 mm, which is brittle and prone to fall apart, is formed.

The graphite powder is obtained by coarsely pulverizing an isotropic graphite material ET-10 manufactured by Ibiden Co., Ltd. and subsequently pulverizing it by means of a jet mill.

The bulk density of the core section is 1.05 g·cm⁻³.

### <Covering Material Formation Step>

The core section obtained in the above step is placed in a CVD furnace with care so as not to fall apart and an SiC layer is formed by the thermal CVD method. Specifically, the core section obtained in the above step is placed in a CVD furnace under normal pressure and, after heated to 1200°C, a mixed gas containing methyltrichlorosilane as a raw material gas and hydrogen as a carrier gas is introduced therein. After vapor deposition is continued for 5 hours, the mixed gas and heating are stopped and the core section is cooled, thereby forming a covering layer of SiC on the surface of the core section.

The thickness of the SiC layer thus formed is 40 µm.

When the SiC layer of the resulting member for nuclear reactors is destroyed and the inside is checked, the aggregate of graphite particulate matter were not bound to form a coalition but were maintained in a powder form or a particle form. Therefore, there can be obtained a member for nuclear reactors capable of being stably used with maintaining the whole shape by the covering layer even when the aggregate of graphite particulate matter is irradiated with neutrons and expanded and contracted, without damaging the member for nuclear reactors by the powdery or particulate core section, without generating swelling, creep deformation, and the like even when directly exposed with neutrons.

### [Example 2]

The following will describe Example 2 according to the present invention. FIG. 2 is a cross-sectional view of the member for nuclear reactors of Example 2 of the invention. Example 2 has a structure where the surface of a pellet-shaped core section is covered with a covering layer of pyrolytic carbon and is further covered with a covering layer of silicon carbide (SiC).

### <Core Section Molding>

A graphite powder that is a graphite particulate matter having a weight of 3.1 g and a 50% volume particle size of 3.65 µm is filled into a mold having an aperture of φ25 mm and is pressurized under a pressure of 19 MPa. A core section molded from the graphite powder is taken out of the mold. A flat plate-like core section with φ25×6 mm, which is brittle and prone to fall apart, is formed.

The graphite powder is obtained by coarsely pulverizing an isotropic graphite material ET-10 manufactured by Ibiden Co., Ltd. and subsequently pulverizing it by means of a jet mill.

The bulk density of the core section is 1.05 g·cm⁻³.

### <Covering Material Formation Step>

In the present Example, different from Example 1, a pyrolytic carbon layer is first formed and thereafter an SiC layer is formed.

The core section obtained in the above step is placed in a CVD furnace with care so as not to fall apart and a pyrolytic carbon layer is formed by the thermal CVD method. Specifically, the core section obtained in the above step is placed in a CVD furnace and, after heated to 1500°C, methane was introduced therein as a raw material. After vapor deposition is continued for 5 hours, the raw material gas and heating are stopped and the core section is cooled, thereby forming a covering layer of pyrolytic carbon on the surface of the core section.

The thickness of the SiC layer thus formed is 40 µm.

Then, the core section covered with the pyrolytic carbon is placed in another CVD furnace and an SiC layer is formed by the thermal CVD method. Specifically, the core section obtained in the above step is placed in a CVD furnace under normal pressure and, after heated to 1200°C, a mixed gas containing methyltrichlorosilane as a raw material gas and hydrogen as a carrier gas is introduced therein. After vapor deposition is continued for 5 hours, the mixed gas and heating are stopped and the core section is cooled, thereby forming a covering layer of SiC on the surface of the core section.

The thickness of the SiC layer thus formed is 40 µm.

When the covering layer (pyrolytic carbon layer and SiC layer) of the resulting member for nuclear reactors is destroyed and the inside is checked, the aggregate of graphite particulate matter were not bound to form a coalition but were maintained in a powder form or a particle form. Therefore, there can be obtained a member for nuclear reactors capable of being stably used with maintaining the whole shape by the covering layer even when the aggregate of graphite particulate matter is irradiated with neutrons and expanded and contracted, without damaging the member for nuclear reactors by the powdery or particulate core section, without generating creep deformation and the like even when directly exposed with neutrons.

Although the members for nuclear facilities obtained in the present Examples are pellet-shaped ones but the shape of the member for nuclear reactors can be changed according to the shape and type of a nuclear reactor. Moreover, in the case of a complex shape, by adding a thin binder to the aggregate of graphite particulate matter, the shape of the member can be maintained until the vapor deposition has commenced and can be made to correspond to a member of any shape for member for nuclear reactors.

### Description of Reference Numerals and Signs

1: Core section
2, 21, 22: Covering layer
10: Member for nuclear reactors

## Claims

1. A member for neutron moderation or neutron shielding for nuclear reactors (10), the member (10) comprising:
a core section (1) consisting of an aggregate of graphite particulate matter, wherein the particulate matter is not bonded with one another; and
a covering layer (2) deposited on a surface of the core section, comprising a ceramic dense body, and **characterized in that** the ceramic dense body covers the whole core section (1).

2. The member for neutron moderation or neutron shielding for nuclear reactors according to claim 1,
wherein the particulate matter comprises natural graphite or synthetic graphite.

3. The member for neutron moderation or neutron shielding for nuclear reactors according to claim 1 or 2,
wherein the covering layer (2) is a vapor deposition layer.

4. The member for neutron moderation or neutron shielding for nuclear reactors according to any one of claims 1 to 3,
wherein the covering layer (2) comprises one or two or more covering layers (21, 22) each including materials selected from pyrolytic carbon, silicon carbide, zirconium carbide, tantalum carbide, and titanium carbide.

5. Neutron moderator or neutron shield comprising the member for neutron moderation or neutron shielding for nuclear reactors (10) according to any one of claims 1 to 4.

## Patentansprüche

1. Element zur Neutronenmoderation oder Neutronenabschirmung für Kernreaktoren (10), wobei das Element (10) umfasst:
einen Kernabschnitt (1), der aus einem Aggregat von partikelförmigem Graphit besteht, wobei das partikelförmige Material nicht miteinander verbunden ist; und
eine Deckschicht (2), die auf einer Oberfläche des Kernabschnitts abgeschieden ist, die einen dichten keramischen Körper aufweist und **dadurch gekennzeichnet ist, dass** der dichte keramische Körper den gesamten Kernabschnitt (1) bedeckt.

2. Element zur Neutronenmoderation oder Neutronenabschirmung für Kernreaktoren nach Anspruch 1,
wobei das partikelförmige Material natürlichen Graphit oder synthetischen Graphit aufweist.

3. Element zur Neutronenmoderation oder Neutronenabschirmung für Kernreaktoren nach Anspruch 1 oder 2,
wobei die Deckschicht (2) eine Dampfabscheidungsschicht ist.

4. Element zur Neutronenmoderation oder Neutronenabschirmung für Kernreaktoren nach einem der Ansprüche 1 bis 3,
wobei die Deckschicht (2) eine oder zwei oder mehr Deckschichten (21, 22) umfasst, die jeweils Materialien enthalten, die aus pyrolytischem Kohlenstoff, Siliziumcarbid, Zirkoniumcarbid, Tantalcarbid und Titancarbid ausgewählt sind.

5. Neutronenmoderator oder Neutronenschild, umfassend das Element zur Neutronenmoderation oder Neutronenabschirmung für Kernreaktoren (10) nach einem der Ansprüche 1 bis 4.

## Revendications

1. Élément pour la modération de neutrons ou le blindage neutronique pour des réacteurs nucléaires (10), l'élément (10) comprenant :
une section de coeur (1) consistant en un agrégat de matière particulaire de graphite, dans lequel les particules ne sont pas liées les unes aux autres ; et
une couche de couverture (2) déposée sur une surface de la section de coeur, comprenant un corps dense en céramique, et **caractérisé en ce que** le corps dense en céramique recouvre toute la section de coeur (1).

2. Élément pour la modération de neutrons ou le blindage neutronique pour des réacteurs nucléaires selon la revendication 1,
dans lequel la matière particulaire comprend du graphite naturel ou du graphite synthétique.

3. Élément pour la modération de neutrons ou le blindage neutronique pour des réacteurs nucléaires selon la revendication 1 ou 2,
dans lequel la couche de couverture (2) est une couche de dépôt en phase vapeur.

4. Élément pour la modération de neutrons ou le blindage neutronique pour des réacteurs nucléaires selon l'une quelconque de revendications 1 à 3,
dans lequel la couche de couverture (2) comprend une ou deux couche(s) de couverture (21, 22) ou plus, comportant chacune des matériaux choisis parmi le pyrocarbone, le carbure de silicium, le carbure de zirconium, le carbure de tantale, et le carbure de titane.

5. Modérateur de neutrons ou écran neutronique comprenant l'élément pour la modération de neutrons ou le blindage neutronique pour des réacteurs nucléaires (10) selon l'une quelconque de revendications 1 à 4.
